# EUROPEAN PATENT APPLICATION

(11) **EP 4 480 676 A1**
(43) Date of publication of application: **25.12.2024**
(21) Application number: 23180488.1
(22) Date of filing: 20.06.2023
(51) Int. Cl.: B29C 64/106, B29C 64/118, B29C 64/182, B29C 64/209, B29C 64/236, B29C 64/245, B29C 64/393, B33Y 10/00, B33Y 30/00, B33Y 40/20, B33Y 50/02

(54) **IMPROVED ADDITIVE MANUFACTURING SYSTEM AND METHOD**

(71) Applicant: VITO NV, 2400 Mol (BE)
(72) Inventor: LEFEVERE, Jasper, B-2400 Mol (BE); MICHIELSEN, Bart, B-2400 Mol (BE); BREUGELMANS, Jef, B-2400 Mol (BE)
(74) Representative: V.O.

(57) **Abstract**

The present invention concerns an additive manufacturing system (1) for manufacturing one or more three-dimensional (3D) objects, comprising: - a print surface actuation unit which is configured to hold a print surface (2), - at least one deposition unit (3) comprising at least one nozzle (4A-4E) arranged for dispensing a building material, preferably in the form of filaments, through an opening area thereof on the print surface, and at least one nozzle actuation unit (10) arranged to hold the at least one nozzle, - a controller configured to operate the system for deposition of the building material, preferably in the form of filaments, on the print surface in an interconnected arrangement in a plurality of stacked layers in order to form the one or more three-dimensional objects, whereby the controller is configured to, during deposition of the building material by said deposition unit: - control the print surface actuation unit to move the print surface within a two-dimensionally (2D) defined print surface zone within which zone the print surface is moved during deposition of the building material, - control the nozzle actuation unit to move the at least one nozzle along a one-dimensionally (1D) defined nozzle trajectory, which extends under an angle with respect to the two-dimensionally defined print surface zone, thereby arranging a 3D relative position between the print surface and the nozzle for manufacturing the one or more 3D objects.

## Description

### Technical field

The invention relates to a system and method for manufacturing one or more three-dimensional objects. Furthermore, the invention relates to a use of the system for manufacturing one or more three-dimensional objects.

### Background

Additive manufacturing (AM), also commonly called 3D printing, continues to gain importance in industrial production processes. This has provided an incentive to develop AM processes which are capable of large-throughput, i.e. of simultaneously building large numbers of objects

European patent application EP 3 851 267 A1 discloses a system and method for manufacturing three-dimensional structures. The system includes plurality of printing stations and a robotic unit configured to interact with the plurality of printing stations, each of the plurality of printing stations being arranged to be accessible by the robotic unit. Each printing station includes a station controller for controlling at least one deposition control parameter. The system further includes a system controller configured to operate the robotic unit. The system controller is communicatively coupled to the plurality of printing stations for controlling at least an execution of printing tasks being performed on the plurality of printing stations.

European patent application EP 3 915 764 A1 discloses a multiple axis robotic additive manufacturing system which includes a robotic arm carrying a print head, for example an extrusion head for printing parts from a filament feed stock. The robotic arm is movable in six degrees of freedom. The system includes a build platform movable in at least two degrees of freedom, such as but not limited to tilting (rotation) in the y-axis, and various translations. A controller contains software and hardware for controlling the motion of the robotic arm and the build platform, as well as the printing operation of the print head. The building platform is moveable independent of the movement of the robotic arm to position the part being built to counteract effects of gravity based upon part geometry. The extruder is configured to extrude at least part material with a plurality of flow rates, wherein movement of the robotic arm and the build platform are synchronized with the flow rate of the extruded material to build the 3D part. The deposition unit is moving in at least two directions, of which at least one direction has a significant lower acceleration and travel time than the other(s). This may result in vibrations at high printing speeds and hence may limit the maximum printing speed. This may be limited by increasing the mechanical stiffness of the equipment, but this increases equipment costs. Furthermore, the systems occupies a significant amount of space.

The present invention aims to provide an additive manufacturing system and method for carrying out additive manufacturing, which allow to simultaneously produce a large number of 3D objects and hence to scale up production, thereby minimising the risk to the formation of defects and maintaining print quality even at high printing speeds.

### Summary of the invention

The present invention concerns an additive manufacturing system in accordance with claim 1.

In the additive manufacturing system of this invention for manufacturing a three-dimensional (3D) object, the XY movement carried out by the print surface for achieving deposition of the building material in a XY plane, is uncoupled from the Z movement carried out by the at least one deposition unit in a further direction which extends under an angle with respect to the XY plane. The movement in Z direction extends under an angle with respect to the XY direction. The movement in a XY plane is arranged to permit deposition of building material for forming 3D objects within a layer. The movement in Z direction is arranged to permit building material deposition in a XY plane above or on top of a previously deposited XY layer, at a position which is shifted along the Z direction with respect to the previously deposited XY layer. Herein, "XY" refers to a 2D movement, preferably a planar 2D movement, preferably in two orthogonal directions X and Y, and "Z" refers to a 1D movement, preferably a linear movement, preferably in upright direction, in particular perpendicular, with respect to the XY plane. The advantages of such a decoupling are high in respect of scaling up the throughput, compactness and stability of the system.

This arrangement, with independently controlled movement in the XY plane and Z direction, provides for a better possibility of scaling up the additive manufacturing process.

Firstly, upscaling of the process may be facilitated because the number of nozzles per deposition unit can be more easy increased without affecting or compromising the movement of the at least one deposition unit and the nozzles, since their movement is confined to a movement in one single direction, i.e. the Z direction. Increasing the number of nozzles can be more easily done as it does not involve the need for heavier of more complex nozzle actuation units, which would be the case if the nozzles would have to be carry out XY movements to form layers of building material during building material deposition. Therefore, in the additive manufacturing system of this invention, the number of nozzles contained in the deposition unit may vary within wide ranges. In a preferred embodiment, the at least one deposition unit comprises multiple nozzles, such as 2, 3, 4, 5, 6, 7, 8, 9, 10, 11, 12, 13, 14, 15, 16 or more nozzles, such as 20 or more nozzles, such as 30 or more nozzles. Preferably hereby, the nozzle actuation unit is arranged to hold multiple nozzles. As a result, the 1D movement of the multiple nozzles in Z direction can be coordinated, and preferably the multiple nozzles can be actuated simultaneously. Preferably also the multiple nozzles are actuated in the same manner, to carry out the same movement in Z direction. This allows to simultaneously manufacture many 3D objects, wherein a print surface unit comprising a print surface is moved in the XY plane by a print surface actuation unit to achieve deposition of several parallel layers of building material in an XY plane by the multiple nozzles. Building of the 3D object in Z direction is achieved by arranging 3D relative positions between the print surface on the one hand and each of the multiple nozzles on the other hand during building material deposition. Optionally, the additive manufacturing system of this invention comprises multiple deposition units with multiple nozzles, and the multiple deposition units are connected to the nozzle actuation unit to further increase the number of nozzles that can simultaneously print on the same print surface.

Secondly, multiple systems according to the present invention, and/or multiple deposition units of the present invention can be placed close to each other and/or even above or on top of each other. Note hereby that, a print surface and a deposition unit occupy a certain volume that extends in three dimensions. In the additive manufacturing system of the present invention, the dimensions of the system occupied in the XY direction and the Z direction may be controlled independently of each other due to the uncoupled movement of the at least one deposition unit and the print surfaces. The volume taken up by an additive manufacturing system of the present invention is therefore made up of (1) a region which mainly extends in XY direction with limited dimension in Z direction (e.g. height direction), within which the 2 dimensional XY movement is carried out by the print surface, in combination with (2) a region which extends mainly in Z direction with limited dimensions in X and Y direction, (in particular in width and length), which corresponds to the movement of the at least one building material deposition unit in Z direction. As such the present invention provides a more compact solution in space to the 3D printing devices, allowing easier upscaling.

Thirdly, splitting the movements in an additive manufacturing system in an XY direction movement and a Z direction movement, having the movement in XY direction and Z direction carried out by different devices (i.e. print surface and deposition unit) and having each of those movements and parts actuated independently, allows to individually optimize the devices carrying out those movements as well as the movements as such, so that printing speed can be maximised while maintaining a desired quality of the 3D printed objects. The optimisation may take into account the nature of the devices that need to be moved and the nature and number and nature of the movements to be made. In particular, the printing surface may have a relatively low weight that increases in the course of the printing process and the deposition unit or nozzles may have a significantly higher weight than the print surface. Also the printing surface may need to have a high mechanical stiffness during the printing process to minimise vibrations caused to the printed objects during printing, as these may give rise to unwanted defects in the 3D printed objects and adversely affect quality. Vibrations may for example occur during the repeated acceleration and deceleration actions occurring in the XY movement of the print surface. Such vibrations may negatively affect the print quality or imply a need to limit the maximum attainable printing speed.

Indeed, because a 3D object is built by layer by layer deposition of building material, the number of movements to be carried out in XY direction to build a single layer may be significantly larger than the number of movements to be carried out in height direction, defined as the direction which extends in upward direction of the layers, preferably essentially perpendicular to the layers. Acceleration of the additive manufacturing process may therefor mainly involve acceleration of layer formation by material deposition in XY direction on the print surface. The movement in Z direction tends to be slow and with limited acceleration compared to in-layer movements in XY direction which are faster and involve with higher accelerations, allowing separate optimization of the nozzle movement and the print surface movement. The additive manufacturing system of this invention with the uncoupled controlling of the print surface movement in XY direction and the nozzle movement in Z direction allows separate and individual optimization of the print surface movement in XY direction to achieve in-layer building material deposition, and the nozzle movement in Z direction to build further layers.

Furthermore, the system of the present invention allows to better optimize equipment efficiency, print stability and/or cost.

The terms "first", "second", and the like, as used herein do not denote any order, quantity, or importance/relevance, but rather are used to distinguish one element from another. Also, the terms "a" and "an" do not denote a limitation of quantity, but rather denote the presence of at least one of the referenced items.

"Optional" or "optionally" means that the subsequently described event or circumstance may or may not occur, and that the description includes instances where said event or circumstance occurs and instances where it does not.

It will be appreciated that any of the aspects, features and options described in view of the system apply equally to the method and the described controller, print surface actuation unit, nozzle actuation and/or robotic unit. It will also be clear that any one or more of the above aspects, features and options can be combined.

### Overview of the figures

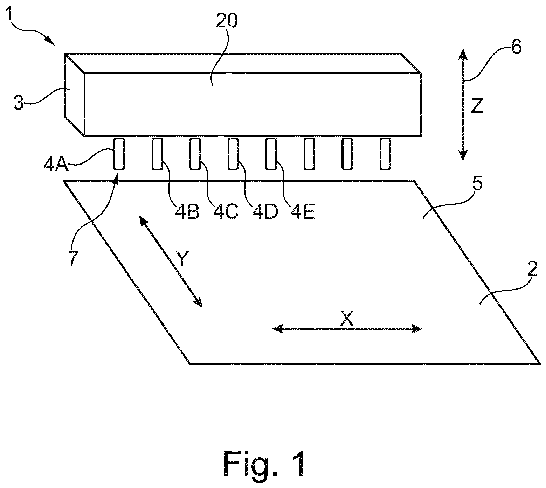

- **Fig. 1**: shows a schematic view of an embodiment of the present invention.

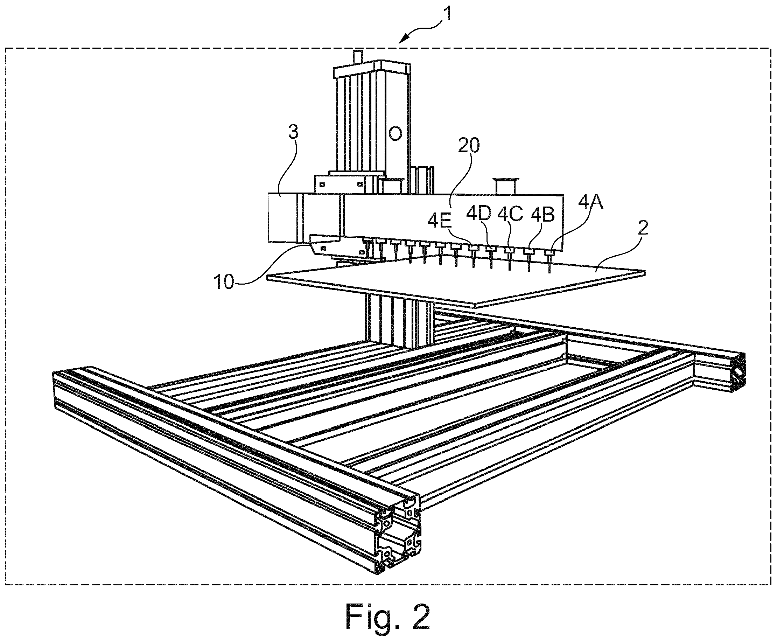

- **Fig. 2**: shows a perspective view of an embodiment of the present invention.

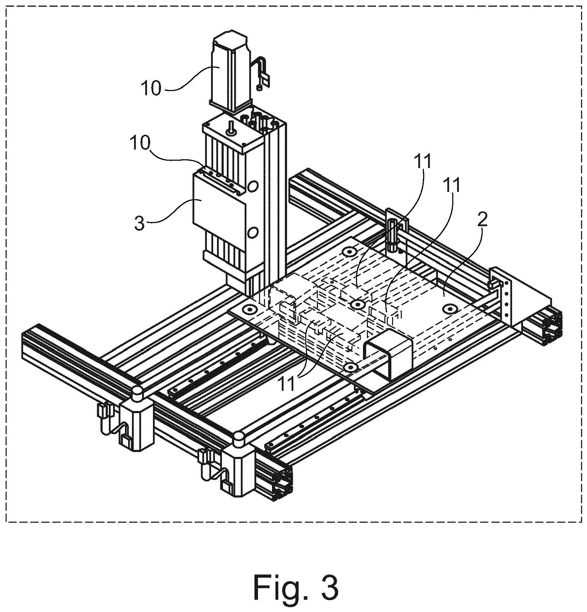

- **Fig. 3**: illustrates the present invention with respect to the movability of the components.

### Detailed description of the invention

The present invention is further described with aid of the figures, which serve to illustrate the invention.

The present invention concerns an additive manufacturing system (1) for manufacturing three-dimensional (3D) objects. A 3D structure or object can be built on a building surface or print surface (2), preferably in a layer-by-layer manner. The print surface will then hold the 3D object. Hereto, a deposition unit (3) can dispense, via a nozzle (4A, 4B, 4C, 4D, 4E), a building material on the print surface. In order to construct a 3D object, the nozzle must be allowed to take any 3D relative position relative to the print surface, at least within the boundaries of the volume taken up by the 3D object to be printed. In prior art systems, the print surface may have been kept fixed, while the nozzle was arranged to move in three dimensions, or vice versa, the nozzle was fixed and the print surface was arranged to move in three dimensions. In the present invention, the 3D relative position is obtained by a combined movement of both the print surface and the nozzle. More in particular, the print surface (2) is made to move in a two-dimensional print surface (X,Y) zone (5), while the nozzle (4A-4E) is made to move along a one-dimensional (Z) trajectory (6), which trajectory comprises a component that extends under an angle to the 2D zone (5), preferably an upright component, more preferably a perpendicular component, such that each 3D relative position can be reached which is necessary to construct the three dimensional object.

The system thereto comprises:
- at least one deposition unit (3) comprising at least one nozzle (4A) arranged for dispensing a building material through an opening area (7) thereof on a print surface (2) and at least one nozzle actuation unit (10) arranged to hold the at least one nozzle.

Hence, the nozzle can be moved by the nozzle actuating unit in the desired manner.

The system further comprises:
- a controller configured to operate the system (1) for deposition of a building material, preferably a building material paste, on the print surface (2) in an interconnected arrangement in a plurality of stacked layers in order to form the one or more three-dimensional objects.

The controller can hereby be configured to control the process parameters for dispensing the building material, preferably the building material paste, through the nozzle, such as pressure, flow, temperature, etc. Preferably the building material is a viscous building material paste, whereby the viscosity of the paste preferably ensures that at least a minimal pressure needs to be exerted on the paste before the paste can be extruded through the opening in the nozzle. The manufacturing of the structure is typically performed by extrusion of filaments of the viscous building material through a nozzle. Within a layer filaments may be positioned substantially parallel or not. Within a layer, filaments may be positioned next to each other or at a distance from each other, and the distance between filaments may be constant throughout one layer or it may differ. Also, the distance between filaments of different layers, may be the same or different. The manufacturing of the structure is typically performed by stacking layer on top of layer.

The system also comprises:
- a print surface actuation unit (11) which is configured to hold the print surface (2).

This allows the print surface to be displaced.

The print surface action unit is arranged to hold and move the print surface in a stable manner, so that vibrations in the course of the XY movement of the print surface to achieve building material deposition, may be minimised. Stabilisation of a print surface while being moved may be achieved according to various techniques known to the skilled person. An example of a suitable technique for moving a print surface involves the use of rotatable axes or spindles for moving the print surface, one extending in X direction, one extending in Y direction. The print surface may be mounted to such rotatable axes. An advantage of such a system is a high rigidity. Rotation of the axes/spindles causes the print surface to move. Varying the rotation speed may vary the rate with which the print surface is moved. Varying the rotation speed may be achieved in a smooth manner, and thereby minimise the occurrence of vibrations. It shall be clear that movement of the spindles may be carried out in a controlled manner and may be controlled by the controller configured to operate the system. The skilled person will be aware of existing, equivalent systems.

In the system of the present invention, the controller is configured to, during deposition of the building material, and preferably the building material paste, by said deposition unit:
- control the print surface actuation unit (11) to move the print surface (2) within a two-dimensionally (2D) defined print surface zone, and
- control the nozzle actuation unit (10) to move the at least one nozzle (4A-4E) along a one-dimensionally (1D) defined nozzle trajectory, which extends under an angle with respect to the two-dimensionally defined print surface zone

As such, a 3D relative position between the print surface and the nozzle for manufacturing the 3D object can be arranged.

The present invention also concerns a method for manufacturing one or more three-dimensional objects, the method including:
- dispensing, by means of at least one deposition unit comprising at least one nozzle, a building material on a print surface;
- operating, by means of a controller, a system for deposition of filaments of a building material on the print surface in an interconnected arrangement in a plurality of stacked layers in order to form the one or more three-dimensional objects; and
- arranging a 3D relative position between the print surface and the at least one nozzle for manufacturing the 3D object by:
   ∘ moving the print surface within a two-dimensionally (2D) defined print surface zone, and
   ∘ moving the at least one nozzle along a one-dimensionally (1D) defined nozzle trajectory,
whereby the 3D relative position between the print surface and the at least one nozzle is being changed to construct the one or more three-dimensional objects by depositing building material on the print surface.

In an embodiment of the invention, a layer of building material is printed or formed by deposition of building material in two dimensions on the print surface. Thereto, a first amount of building material is deposited along a first dimension, and a second amount of building material is deposited next to and at least partially along the first amount after having shifted the print surface in the second direction. Manufacturing of a layer of a 3D object in two dimensions therefor involves a large number of back and forth motions of the print surface to deposit the layer of building material. A next layer of building material may be deposited on a previously printed layer, by moving the nozzle and print surface with respect to each other in a further third dimension, after which the next layer can be build by deposition of building material in two dimensions using a back and forth motion of the print surface in two dimensions as described above. Thus, a three-dimensional object can be obtained.

Further, the velocity of deposition may be varying during deposition of a layer of building material.

A first layer of building material is printed or formed by deposition of building material in two dimensions on the print surface. Thereto, a first amount or filament of building material is deposited along a first dimension, and a second amount or filament of building material is deposited next to and at least partially along the first amount after having shifted the print surface in the second direction over a desired distance with respect to the first filament.

When depositing the first amount of filaments, the system starts from a position in rest, the print surface accelerates, moves at a desired moving speed or rate and slows down at the end of the first line, to accelerate again to build the second filament alongside the first filament, move at a desired moving speed and slow down again at the end of the second filament. This process of accelerating, moving at a desired speed and slowing down of the print surface is repeated each time when building a filament next to a previously build one. Especially during acceleration and slowing down the risk to the occurrence of vibrations is high. Hence, in an embodiment, the method of this invention involves depositing building material in a layer by moving the print surface along printing paths in the 2D defined print surface zone, whereby preferably the print surface moves along a printing path, preferably a printing line, and preferably along each of said printing paths or printing lines within the print surface zone, according to a predefined velocity or speed profile. The print velocity or printing speed profile will usually comprise an acceleration portion, a deceleration portion, and optionally an essentially constant high-velocity movement portion therebetween.

Accelerating the printing process can be achieved if the printing process in both X and Y dimension can be accelerated and its acceleration and speed can be easily controlled. The present invention allows optimization of the 2D movement and the way it is generated to minimise vibrations. Also, by providing a system with a high mechanical stiffness in XY direction, vibrations caused within the printed building material when moving the print surface during printing can be minimised. Further by providing a system in which the print surface speed can be controlled, the movement speed in XY direction can be adapted taking into account the mechanical stiffness and the risk to the occurrence of vibrations.

The number of movements in the third direction is usually limited and significantly lower than the number of movements in the first and second direction.

Optimization of the total printing process time is mainly determined by optimization of the way the XY movements are carried out and the building time of deposition of each layer.

Preferably the angle under which the 1D trajectory extends with the print surface zone is at least 45°, such as 45°, 50°, 55°, 60°, 65°, 70°, 75°, 80° or any value therebetween or above. More preferably, said angle is at least 80°, such as 80°, 81 °, 82°, 83°, 84°, 85°, or any value therebetween or above, even more preferably at least 85°, such as 85°, 86°, 87°, 88°, 89°, 90° or any value there between. Most preferably the angle is essentially 90°.

Preferably the method involves manufacturing multiple 3D objects by dispensing, by means of the at least one deposition unit comprising multiple nozzles, a building material on the print surface at multiple build locations. Preferably the method involves manufacturing n 3D objects using n nozzles, whereby n is at least 2, such as 2, 3, 4, 5, 6, 7, 8, 9, 10, 11, 12, 13, 14, 15, 16 or more, such as 20 or more, such as 30 or more.

As indicated above, the 3D relative position is achieved by a combined movement of both nozzle and print surface by the nozzle actuation unit and the print surface actuation unit respectively. Hereby, the arrangement that the print surface is made to move within a 2D print zone and the nozzle is made to move along a 1D trajectory, allows to make the complete system more stable, more compact and cheaper. The 2D movement of the print surface is a relatively easy movement to achieve, in particular if the 2D movement is a planar movement, and even more so if the print surface is planar and the 2D movement is a planar movement in the plane of the print surface, e.g. using a commercially available 2D workbench. Such a 2D movement can be much more easily stabilized than any 3D movement, where the movement needs to be stabilized in an additional direction. The 1D movement of the nozzle can also be achieved in a stable manner using, e.g. a rail or a commercially available linear actuator. Thus, the 2D movement and the 1D movement can be carried out, controlled and stabilised independently of each other, in a way which may be optimised taking into account the nature of the movement. This is important as the number of two-dimensional movements in 2D direction - to deposit building material within one layer by repeated back and forth motions - is significantly larger than the number of movements in the additional 1D direction.

In an embodiment, the controller is configured to control the print surface actuation unit (11) to move the print surface at a first speed within the 2D defined print surface zone and to control the nozzle actuation unit (10) to move the at least one nozzle (4A-4E) at a second speed along the 1D defined nozzle trajectory, whereby preferably the second speed is smaller than the first speed. The number of movements to be made in the 2D print surface zone is namely significantly larger than the number of movements to be made along the 1D nozzle trajectory. Moreover, the weight of the print surface can be arranged to be significantly lower than the weight of the nozzle - or of a bridge carrying several nozzles. As such the time necessary to print the 3D object can be minimized by keeping the print surface lightweight and thus faster to move, whereas the nozzle may be heavy as it does not need to be moved very fast. Indeed, the nozzle is preferably optimized according to other specifications, e.g. with respect to extrusion parameters, such as extrusion speed or flow rate. Furthermore, a heavy print surface may also lead to more vibrations, whereas the vibrations of a light print surface are usually better controllable. A print surface may typically have a weight of a few hundred of grams to a few kg, whereas a printing nozzle may typically have a weight of several tens of kilos or more.

It should be noted that the term "print surface" refers to the surface onto which the 3D object can be printed or deposited, and that the term "print surface zone" refers to the zone or area wherein the print surface can be moved, and which is two-dimensional. Hence, when stating "to move the print surface ... within the 2D defined print surface zone", it is meant to indicate that the movement of the print surface is basically constricted to a pre-defined 2D zone.

As indicated, the present invention allows upscaling by using multiple nozzles. Moreover, making changes to the nozzles with respect to number, positioning, orientation can be much easier than in prior art systems. Preferably hereto, the deposition unit comprises a bridge (20), said bridge preferably stretching in a direction essentially perpendicular to the 1D defined nozzle trajectory, whereby the at least one nozzle, and preferably the multiple nozzle, are attached to the bridge, and whereby the controller is configured to control the nozzle actuating unit to move the nozzle or nozzles simultaneously along the one-dimensionally (1D) defined nozzle trajectory by moving the bridge, i.e. the nozzle actuating unit actuates the bridge on which one or multiple nozzles can be arranged. Using multiple nozzles, multiple identical 3D objects can be produced in parallel: the print surface makes to 2D movement while the multiple nozzles preferably make parallel 1D movements, thus constructing essentially identical 3D objects.

Further, note that the easier altering of the nozzles allows to optimize for different types of 3D objects to be printed. If smaller objects are to be printed, more nozzles can be arranged next to each other on the bridge, allowing increased throughput. Also note that the present invention allows to use lightweight nozzles, allowing many nozzles to be used per deposition unit: whereas prior art systems wherein the nozzle can move in 3D or even 2D zones typically need to use more intricate, and thus heavier types of nozzles, the present invention may use simple, and thus lighter types of nozzles, because they only need to move along a 1D defined trajectory. Hence, preferably, the nozzle has an empty mass of between 0.5kg and 10kg, more preferably at most 9kg, such as 9, 8, 7, 6, 5, 4, 3, 2, 1kg or any value therebetween. This preferably applies to each nozzle in case multiple nozzles are used. As such, nozzles each having an empty mass of about 4kg, which can each weigh about 10kg when filled with e.g. building material paste, have a combined weight of 160 kg when 16 nozzles are used. Although heavy, these can still be manipulated simultaneously along a 1D trajectory using e.g. a bridge, especially since the 1D movement along the 1D trajectory can be executed at a relatively low speed compared to the speed of the 2D movement of the print surface.

Note that the bridge may be supported by 1, 2, 3, 4 or more supports. Further, the bridge may span across the full length or width of the print surface and/or of the print surface zone, or it may span partially over the print surface and/or the print surface zone.

Also note that one does not necessarily require multiple print surfaces in the present invention, and that a system according to this invention may comprise a single print surface. Nevertheless, in an embodiment, the system comprises multiple print surfaces, such as 2, 3, 4, 5, 6, 7, 8, 9, 10, 11, 12, 13, 14, 15, 16 or more print surfaces, such as 20 or more print surfaces, such as 30 or more print surfaces. Preferably the controller is configured to control the print surface actuation unit to move each print surface within the respective two-dimensionally (2D) defined print surface zones. Note that in this manner, a single print surface actuation unit can simultaneously move the multiple print surfaces, preferably along parallel paths. Using multiple print surfaces may allow to reduce the print surface weight, i.c. by not requiring one large print surface, and may actually also be used to scale up in the height direction, i.e. multiple print surfaces may preferably be positioned next to or above one other in the direction essentially perpendicular to the 2D defined print surface zones such that the print surface zones of the multiple print surfaces are essentially parallel, preferably the multiple print surfaces are positioned above one another.

In an embodiment, the 2D defined print surface zone is a planar area, preferably a horizontally planar area. Planar areas are typically easier to define and delimit.

In an embodiment, the 1D defined nozzle trajectory is a straight trajectory, preferably a trajectory which extends upward from the 2D print surface zone, more preferably essentially perpendicular to the 2D print surface zone, preferably the trajectory being an upright trajectory.

In an embodiment, the additive manufacturing system comprises a plurality of building material deposition units, each comprising at least one nozzle, wherein each of the plurality of the deposition units is accessible by the print surface actuation unit for printing.

In an embodiment, the system comprises a first deposition unit and a second deposition unit, wherein the first and second deposition units are different; and wherein the print surface actuation unit is configured to manipulate the print surface so as to perform a first part of a printing process at the first deposition unit, and to manipulate the print surface so as to perform a second part of the printing process at the second deposition unit. In a preferred embodiment, the second part of the printing process is performed on top of the first part of the printing process.

Optionally, the first deposition unit is configured to print a first build material, and the second deposition unit is configured to print a second build material, the first and second build materials being different. Advantageously, a multi-material 3D structure can be efficiently manufactured by using at least the first and second deposition units.

Optionally, the first deposition unit comprises at least a first nozzle, and the second deposition unit comprises at least a second nozzle, wherein the first and second nozzles are different with respect to each other. For example, the first and second nozzles may have different arrangements, dimensions, shapes, configurations, etc. Additionally or alternatively, the first and second nozzles may be operated using different process parameters (e.g. pressure, temperature, speed of deposition of build material, etc.). In an embodiment, the first deposition unit comprises multiple nozzles and/or the second deposition unit comprises multiple nozzles, the number of nozzles for the first and second deposition units being different or, preferably, the same.

Optionally, the first deposition unit is configured to operate with a first set of process parameters, and the second deposition unit is configured to operate with a second set of process parameters, wherein the first and second process parameters are at least partially different. In some examples, the first deposition unit is configured to print the build material at a first temperature in a first range, and the second deposition unit is configured to print the build material at a second temperature in a second range, wherein the first and second temperatures and/or the first and second temperature ranges are different. In this way, a faster printing process may be required, and detrimental effects due to transient temperature effects may be prevented.

Optionally, the first and second deposition units have a different number of nozzles and/or nozzle configurations. For example, the first deposition unit may have two operating nozzles during the printing process, and the second deposition unit may have four operating nozzles during the printing process. The arrangement of the nozzles may also be different. For example, the different deposition units could also vary in their nozzle diameter and/or nozzle shape. In this way, solid support objects may be printed even faster with the same or a different material than the inner functional objects. For example, when a catalyst 3D structure is printed, an inner portion of the structure may have a high surface area needed for catalysis. An outer portion of the structure (e.g. thick outer walls) may be provided merely for the purpose of strength (cf. support for improving structural integrity). Thus, some parts of the 3D structure being printed may require different properties for which a particular deposition unit may be selected. In this way, depending on the requirements of the 3D structure (e.g. related to the use or application of said structure), the deposition unit can be selected.

Advantageously, the print surface actuation unit and/or the nozzle actuation unit enables advanced processing of the structure during the printing process. For instance, the printing process at a deposition unit may be interrupted for processing at a processing unit, prior to proceeding the printing at the same or different deposition unit. For example, the processing unit may be a laser cutting unit, a drilling unit, a UV curing unit, a cleaning unit, etc. In this way, the quality of the 3D printed structure can be significantly improved in an efficient way. The print surface actuation unit allows easy transport of the printing surface to the processing units.

In an embodiment, the plurality of deposition units are arranged around the print surface actuation unit or along a production line.

In some examples, all deposition units are accessible by the print surface actuation unit. For this purpose the print surface actuation unit can be at least partially surrounded by the deposition units (e.g. arranged centrally). The print surface actuation unit can be arranged to install and place empty printing surfaces in deposition units, and to remove the printing surfaces with three-dimensional objects printed thereon from the deposition units. The printing surfaces with three-dimensional objects printed thereon can be removed from the deposition unit and placed on a cart or any other collecting and/or transport device for removal. A positioning structure may be arranged to enable correct positioning of the printing surface in the collection system (e.g. cart, rack, etc.). If the handling by the print surface actuation unit is not performed correctly, for instance due to bad positioning, the edge of the cart may be bumped unintentionally, which can disrupt the three-dimensional objects on previously placed printing surfaces.

If printing of the three-dimensional objects on the printing surface has been completed (e.g. print job completed or printing surface/plate being full), the print surface actuation unit can be operated to automatically remove the printing surface with the printed three-dimensional objects and to place it in a receiving unit, such as a cart or holder e.g. for transportation. Each deposition unit can preferably be controlled individually. In some examples, different materials can be printed per deposition unit. Furthermore, it is possible to print different shapes per deposition unit, or objects having different dimensions or different geometries. Also different quantities can be printed per deposition unit. The system can be configured to determine whether a correct number of three-dimension objects is printed on the printing surface and then the printing surface with printed three-dimensional objects (e.g. objects, parts, pieces, etc.) can be removed by the print surface actuation unit when the print job has been completed.

The system can be configured to control the print surface actuation unit taking into account printing operations in the plurality of the deposition units. The (sub)tasks for printing the three-dimensional structure(s) can be sent individually or directly to the print surface actuation unit and the deposition unit and the being selected for performing the printing of said three-dimensional structure(s). The system can be configured to enable an individual control for each deposition unit. This can be adjusted separately by an operator, if necessary, for example by means of a terminal. The individual control for the deposition units can for instance be arranged on an outside portion of the deposition unit or the system (e.g. outside the printer housing and/or system housing). In some examples, each deposition unit has an external terminal or interface for enabling individual control over the deposition unit. The printing process can therefore be easily adjusted for each of the deposition units. In some examples, the print surface actuation unit can be communicatively coupled to the selected at least one deposition unit. In this way, the operations of the selected deposition unit, including the movement of the nozzle, and the print surface actuation unit can be synchronized.

Optionally, each of the plurality of deposition units have a substantially same distance from the print surface actuation unit.

A plurality of deposition units may be arranged around the print surface actuation unit in a structured manner. For example, the plurality of deposition units may be arranged in a square, circle, etc. around the print surface actuation unit. In some examples, each deposition unit of the plurality of deposition units has a substantially same distance with respect to the print surface actuation unit.

Optionally, a plurality of deposition units are communicatively coupled to the print surface actuation unit.

In an embodiment, the print surface actuation unit is movably arranged between the plurality of deposition units.

In some examples, the print surface actuation unit is not permanently connected to the at least one deposition unit. The print surface actuation unit may be detachably connectable to the at least one deposition unit.

Optionally, the at least one deposition unit is free of a dedicated movable printing surface arranged in said at least one deposition unit.

Optionally, the print surface is a detachable carrier. The detachable carrier can provide flexibility in post-processing of the 3D printed objects (e.g. after-treatment).

Optionally, the at least one deposition unit includes a reservoir containing build material usable for deposition through the opening area of the one or more nozzles and/or a material providing unit configured to prepare and/or provide said build material, and wherein the reservoir and/or the material providing unit are arranged at the one or more nozzles of said at least one deposition unit.

The build material providing unit may be a material preparation unit or a mixing unit. A build material or a build material providing unit may be heavy. Arranging such units at the nozzle or print head of the deposition unit, or coupled thereto, may result in difficulties in movement of the nozzle. As a result, large and costly actuators may be needed. Advantageously, the print surface is moved by the actuation unit, resulting in an improved design of the additive manufacturing system. A more cost-effective arrangement may be obtained. Additionally, the additive manufacturing system may be more robust, since replacement of one or more components (e.g. tubing) due to movement action of the print head of nozzles may not be necessary. As a result, the deposition unit may require less maintenance. The operating costs can also be reduced.

Optionally, the at least one deposition unit comprises a nozzle which is directly coupled to one or more build material preparation units.

Optionally, the at least one deposition unit comprises a nozzle which is directly coupled to a build material reservoir.

Optionally, the print surface actuation unit and the at least one deposition unit are physically separated from each other.

Optionally, the print surface actuation unit is detachably connectable to the at least one deposition unit.

In an embodiment, the print surface actuation unit is a robotic unit controlled by a controllerto perform one or more additional processing steps, the additional processing including at least one of: plate handling, inspection, cleaning or repositioning.

The print surface actuation unit can be configured to perform other tasks than the actual printing movements. In some examples, the print surface actuation unit may be configured to perform movements of the print surface for cleaning said print surface. For instance, the print surface actuation unit may move the print surface over a cleaning member (e.g. brush) in order to clean the surface of the printing surface. Additionally or alternatively, the print surface actuation unit may be configured to perform quality control, interact with other units, perform active or passive cleaning actions, etc.

Optionally, the print surface actuation unit is configured to move the printing surface towards a sensory unit which is configured to inspect and/or evaluate a printing quality of the 3D printed structure on the printing surface. The sensory unit may for instance comprise a camera. The print surface actuation unit may move the printing surface accordingly in the detection area (e.g. field of view) of the sensory unit such that the 3D printed structure on the printing surface held by the print surface actuation unit can be inspected by said sensory unit (e.g. camera).

In an embodiment, the system further includes a treatment station, wherein the controller is configured to control the print surface actuation unit so as to directly transport the printing surface with printed one or more three-dimensional objects to a treatment station.

In addition to providing movement of the print surface during the printing process, the print surface actuation unit can also be configured to move the printing surface during pre-processing (e.g. cleaning of the print surface) or post-processing (e.g. inspection, cleaning, print surface handling, repositioning, transportation, separation of parts from the printed structure, treatment, curing, drying, replacement of the print surface, etc.). It is also possible that the print surface actuation unit facilitates intermediate steps between parts of the printing process. In some examples, the print surface actuation unit is configured to feed an empty print surface to a cleaning station. In some examples, the print surface actuation unit is configured to perform movements needed for cleaning. In some examples, the print surface actuation unit can provide a partly or fully loaded print surface to a (quality) inspection station. Various additional processing steps can be performed by means of the print surface actuation unit. The print surface actuation unit may have additional devices (e.g. sensors, actuators, etc.) for performing additional tasks.

In an embodiment, the controller is configured to control the print surface actuation unit so as to hold multiple printing surfaces at a same time for simultaneous printing at multiple different deposition units.

Optionally, the print surface actuation unit is configured to hold multiple printing surfaces at a same time for simultaneous printing at multiple different deposition units.

The efficiency of the printing process can be improved, as parallel printing of objects can be obtained in an efficient and effective way. Furthermore, a more robust parallel printing process can be obtained, a same print surface actuation unit is used for multiple print surfaces.

Optionally, the print surface actuation unit is configured to simultaneously handle multiple printing surfaces. Optionally, the print surface actuation unit is configured to perform synchronous movement of the multiple printing surfaces. In some examples, each printing surface of the multiple printing surfaces may be positioned at a different deposition unit. In this way, multiple deposition units can be used simultaneously for parallel printing of the 3D structure.

The print surface actuation unit may comprise a holding unit configured to be equipped with two or more printing surfaces for allowing synchronous movement of said two or more printing surfaces. This allows for robust parallel printing of the structure, for example using multiple deposition units at the same time. By employing such configuration, it can be better guaranteed that a same printing movement has been carried out by the two or more printing surfaces.

Optionally, the print surface actuation unit is configured to carry multiple printing surfaces substantially horizontally or next to each other. Alternatively, the print surface actuation unit may be configured to carry multiple printing surfaces substantially vertically or on top of each other. A combination of such arrangements is also possible, such that a matrix (two-dimensional array) of printing surfaces can be obtained. In such an example, the printing surfaces are on top of each other and next to each other, for example forming a 2x2 matrix, 3x3 matrix, 2x3 matrix, 3x2 matrix, etc. The printing surfaces may be distanced from each other. The print surface actuation unit may for example be a robotic unit comprising a robot arm configured to hold multiple printing surfaces. A cost-effective design can be obtained for parallel additive manufacturing of 3D objects.

Optionally, the system comprises a deposition unit of a first type and a deposition unit of a second type, wherein the first type is associated to a first 3D printing technique, and the second type is associated to a second 3D printing technique. The first and second 3D printing techniques may be different. In this way, a 3D printing structure can be manufactured employing different printing techniques. The printing surface can be easily moved from the deposition unit of the first type to the deposition unit of the second type, and/or vice versa. In this way, advanced additive manufacturing processes can be carried out in an efficient and robust manner.

In some examples, the build material is a paste. The paste can be extruded through the nozzle (cf. micro-extrusion process). However, other printing techniques may also be used, such as for instance fused deposition modelling (FDM).

It will be appreciated that the printing surface can be embodied in various ways. The printing surface can for instance be embodied as a plate, a tray, a carrier, a support, a substrate, a holder, or the like. Various configurations, shapes and dimensions are possible. In some examples, the printing surface provides for a flat surface on which three-dimensional objects are printable. However, the printing surface does not need to be flat. Other shapes are also envisaged. For example, the printing surface may have indentations.

Different types of extrusion additive manufacturing arrangements can be employed, for example filament-fed extrusion, screw extrusion or a syringe extrusion. A combination of these technologies is also possible.

In syringe extruders material can be placed into a syringe and the printer can depress the plunger at a controlled rate to extrude filaments through a nozzle. The syringes may for example be filled with a viscous material. In some examples, additionally a heated jacket can be used for heating the syringe to lower the viscosity of the build material paste or to melt the build material (e.g. polymer filaments or granules) in situ before printing. Different types of syringe extrusion systems are possible. A pneumatic pressure can be applied to the plunger. Alternatively, the plunger can be depressed by means of a mechanical displacement for instance achieved by means of an electric motor. Mechanical displacement may allow for more direct control over the volumetric extrusion rate whereas in pneumatic printers, the extrusion rate may additionally depend on an interplay between needle geometry, material viscosity, pneumatic pressure, and obstruction by previously extruded filaments. Other alternative designs are also possible.

In screw extruders a material can be fed into a screw that is surrounded by a close-fitting sleeve, called a barrel. As the screw rotates, material can be forced through the nozzle at the end of the barrel. The rate of material extrusion from the nozzle can depend on the screw rotation speed. Screw extruders can accommodate materials in paste form, however, for example polymer granules can also be used.

Filament-fed extruders may use reels of filaments fed into a heated melting chamber which is attached to a nozzle. The rate of material extrusion from the nozzle can depend on the rate at which the filament is fed off the reels into the melting chamber. Additive manufacturing software may control the extrusion rate based on the desired diameter of extruded filaments and the speed at which the nozzle is moving.

Various systems can be used for performing the extrusion based additive manufacturing method according to the invention.

The system and method may be employed for manufacturing a three-dimensional porous structure, wherein the porous structure is formed having interconnected pores.

It will be appreciated that the three-dimensional structure can have filaments spaced apart, or it can be a dense structure with filaments adjacent to each other. When the filaments are adjacent to each other, porosity can be provided by the filaments themselves. When the filaments are spaced from each other, porosity can be mainly provided by the pores formed between the filaments. The filaments themselves can also be porous, e.g. having smaller pores.

According to an aspect, the invention relates to a computer implemented method for printing a three-dimensional structure. The computer implemented method may be configured to operate an additive manufacturing system to perform the steps of the printing method according to the invention. Optionally, the computer implemented method includes the steps of: receiving a model of an object to be manufactured, selecting one or more of the plurality of deposition units for printing the (porous) object, and defining a print path depending on desired characteristics of the (porous) object, using the received model of the object to be manufactured. The print path may define the movement of the print surface held by the print surface actuation unit and the movement of the nozzle of the deposition unit. The received model may for instance be a 3D representation of the object to be printed.

Optionally, a material extrusion additive manufacturing process is employed in which a material is deposited continuously in a chosen arrangement.

Some embodiments may be implemented, for example, using a machine or tangible computer-readable medium or article which may store an instruction or a set of instructions that, if executed by a machine, may cause the machine to perform a method and/or operations in accordance with the embodiments.

The system of the present invention allows upscaling of the production process in many different ways:
- the number of nozzles per deposition unit can be varied,
- the number of the print surfaces can be varied,
- the number of deposition units can be varied,
and any combination thereof. Furthermore, the same print surface actuation unit can be used to hold and control multiple print surfaces, or multiple print surface actuation units can be used. A nozzle actuation unit may control a single nozzle, multiple nozzles or one or more bridges onto which one or more nozzles are arranged.

## Claims

1. An additive manufacturing system for manufacturing one or more three-dimensional (3D) objects, comprising:
- a print surface actuation unit which is configured to hold a print surface,
- at least one deposition unit comprising at least one nozzle arranged for dispensing a building material through an opening area thereof on the print surface, and at least one nozzle actuation unit arranged to hold the at least one nozzle,
- a controller configured to operate the system for deposition of the building material, preferably in the form of filaments, on the print surface in an interconnected arrangement in a plurality of stacked layers in order to form the one or more three-dimensional objects,
whereby the controller is configured to, during deposition of the building material by said deposition unit:
- control the print surface actuation unit to move the print surface within a two-dimensionally (2D) defined print surface zone within which zone the print surface is moved during deposition of the building material,
- control the nozzle actuation unit to move the at least one nozzle along a one-dimensionally (1D) defined nozzle trajectory, which extends under an angle with respect to the two-dimensionally defined print surface zone,
thereby arranging a 3D relative position between the print surface and the nozzle for manufacturing the one or more 3D objects.

2. The additive manufacturing system according to claim 1, whereby the at least one deposition unit comprises multiple nozzles.

3. The additive manufacturing system according to claim 2, whereby the deposition unit comprises a bridge (20), whereby the multiple nozzles are attached to the bridge, and whereby the controller is configured to control the nozzle actuating unit to move the nozzles simultaneously along the one-dimensionally (1D) defined nozzle trajectory by moving the bridge.

4. The additive manufacturing system according to any one of the preceding claims, wherein the 2D defined print surface zone is a planar area, preferably a horizontally planar area.

5. The additive manufacturing system according to any one of the preceding claims, wherein the 1D defined nozzle trajectory is a straight trajectory, preferably a trajectory which extends essentially perpendicular to the 2D print surface area, preferably an upright trajectory.

6. The additive manufacturing system according to any one of the preceding claims, wherein the system comprises a plurality of deposition units, each comprising at least one nozzle, wherein each of the plurality of the deposition units is accessible by the print surface actuation unit for printing.

7. The additive manufacturing system according to claim 6, wherein the system comprises a first deposition unit and a second deposition unit, wherein the first and second deposition units are different; and wherein the print surface actuation unit is configured to manipulate the print surface so as to perform a first part of a printing process at the first deposition unit, and to manipulate the print surface so as to perform a second part of the printing process at the second deposition unit.

8. The additive manufacturing system according to claim 6 or 7, wherein the plurality of deposition units are arranged around the print surface actuation unit or along a production line.

9. The additive manufacturing system according to any one of the preceding claims 6-8, wherein the print surface actuation unit is movably arranged between the plurality of deposition units.

10. The additive manufacturing system according to any one of the preceding claims, wherein the print surface actuation unit is controlled by a controller to perform one or more additional processing steps, the additional processing including at least one of: plate handling, inspection, cleaning or repositioning.

11. The additive manufacturing system according to any one of the preceding claims, wherein the system further includes a treatment station, wherein the controller is configured to control the print surface actuation unit so as to transport the printing surface with printed one or more three-dimensional objects to a treatment station.

12. The additive manufacturing system according to any one of the preceding claims, wherein the controller is configured to control the print surface actuation unit so as to hold multiple printing surfaces at a same time for simultaneous printing at multiple different deposition units.

13. A method for manufacturing one or more three-dimensional objects, the method including:
- dispensing, by means of at least one deposition unit comprising at least one nozzle, a building material on a print surface ;
- operating, by means of a controller, a system for deposition of filaments of a building material on the print surface in an interconnected arrangement in a plurality of stacked layers in order to form the one or more three-dimensional objects; and
- arranging a 3D relative position between the print surface and the at least one nozzle for manufacturing the 3D object by:
∘ moving the print surface within a two-dimensionally (2D) defined print surface zone,and
∘ moving the at least one nozzle along a one-dimensionally (1D) defined nozzle trajectory,
whereby the 3D relative position between the print surface and the at least one nozzle is being changed to construct the one or more three-dimensional objects by depositing building material on the print surface.

14. A method according to claim 13, wherein the building material is a building material paste, preferably a viscous building material paste.

15. A method according to claims 13 or 14, comprising depositing building material in a layer by moving the print surface along printing paths in the 2D defined print surface zone, whereby the print surface moves along a printing path, and preferably along each of said printing paths, within the print surface zone according to a predefined velocity profile or speed profile, said velocity profile or speed profile comprising an acceleration portion, a deceleration portion, and optionally an essentially constant high-velocity movement portion therebetween.
